# EUROPÄISCHE PATENTSCHRIFT

(11) **EP 1 444 503 B1**
(45) Veröffentlichungstag und Bekanntmachung des Hinweises auf die Patenterteilung: **13.04.2005**
(21) Anmeldenummer: 02777141.9
(22) Anmeldetag: 18.09.2002
(51) Int. Cl.: G01N 21/64

(54) **VERFAHREN UND VORRICHTUNG ZUM RÄUMLICH ENG BEGRENZTEN ANREGEN EINES OPTISCHEN ÜBERGANGS**
METHOD AND DEVICE FOR PHYSICALLY DEFINED EXCITATION OF AN OPTICAL TRANSITION
PROCEDE ET DISPOSITIF D'EXCITATION SPATIALEMENT RESTREINTE D'UNE TRANSITION OPTIQUE

(30) Priorität: 09.11.2001 DE 10154699
(43) Veröffentlichungstag der Anmeldung: 11.08.2004
(73) Patentinhaber: Max-Planck-Gesellschaft zur Förderung der Wissenschaften e.V., 80539 München (DE)
(72) Erfinder: HELL, Stefan, 37073 Göttingen (DE); DYBA, Marcus, 37077 Göttingen (DE)
(74) Vertreter: Rehberg Hüppe + Partner
(86) Internationale Anmeldenummer: PCT/EP2002/010456
(87) Internationale Veröffentlichungsnummer: WO 2003/040706

(56) Entgegenhaltungen:
- DE-A- 4 416 558
- US-B1- 6 259 104
- DYBA M ET AL: "Focal spots of size lambda /23 open up far-field fluorescence microscopy at 33 nm axial resolution" PHYSICAL REVIEW LETTERS, 22 APRIL 2002, APS, USA, Bd. 88, Nr. 16, Seiten 163901/1-4, XP002229875 ISSN: 0031-9007
- S. W. HELL: "Increasing the Resolution of Far-Field Fluorescence Light Microscopy by Point-Spread-Function Engineering" 1997 , PLENUM PRESS , NEW YORK AND LONDON XP002229877 ISBN: 0-306-45553-6 in der Anmeldung erwähnt Topics in Fluorescence Spectroscopy, Vol. 5: Nonlinear and Two-Photon-Induced Fluorescence, edited by Joseph R. Lakowicz Absätze [9.2.1.2.],[9.2.1.4.],[9.3.],[9.3.1.],[9.3 .2.],[9.5.1.] Abbildungen 9.15.,9.22,9.23.,9.36.,9.37
- KLAR T A ET AL: "Fluorescence microscopy with diffraction resolution barrier broken by stimulated emission." PROCEEDINGS OF THE NATIONAL ACADEMY OF SCIENCES OF THE UNITED STATES OF AMERICA. UNITED STATES 18 JUL 2000, Bd. 97, Nr. 15, 18. Juli 2000 (2000-07-18), Seiten 8206-8210, XP002229876 ISSN: 0027-8424
- KLAR T A ET AL: "SUBDIFFRACTION RESOLUTION IN FAR-FIELD FLUORESCENCE MICROSCOPY" OPTICS LETTERS, OPTICAL SOCIETY OF AMERICA, WASHINGTON, US, Bd. 24, Nr. 14, 15. Juli 1999 (1999-07-15), Seiten 954-956, XP000860571 ISSN: 0146-9592
- SCHMIDT M ET AL: "SUBRESOLUTION AXIAL DISTANCE MEASUREMENTS IN FAR-FIELD FLUORESCENCE MICROSCOPY WITH PRECISION OF 1 NANOMETER" REVIEW OF SCIENTIFIC INSTRUMENTS, AMERICAN INSTITUTE OF PHYSICS. NEW YORK, US, Bd. 71, Nr. 7, Juli 2000 (2000-07), Seiten 2742-2745, XP001099890 ISSN: 0034-6748

## Beschreibung

Die Erfindung bezieht sich auf ein Verfahren zum räumlich eng begrenzten Anregen eines optischen Übergangs, wobei ein sich über einen Fokuspunkt hinweg erstreckender Fokusbereich eines Anregungslichtstrahls, dessen Wellenlänge auf den anzuregenden optischen Übergang abgestimmt ist, mit einem räumlichen, ein Intensitätsminimum an dem Fokuspunkt und mehrere Intensitätsmaxima auf verschiedenen Seiten des Fokuspunkts aufweisenden Interferenzmuster eines den optischen Übergang auf irgendeine Weise beeinflussenden, in Teilstrahlen aufgespaltenen und in dem Fokusbereich in Form seiner fokussierten Teilstrahlen aus unterschiedlichen Richtungen mit sich selbst zur Interferenz gebrachten Abregungslichtstrahls überlagert wird.

Weiterhin bezieht sich die Erfindung auf eine Vorrichtung zur Durchführung eines solchen Verfahrens, mit einer den Anregungslichtstrahl abgebenden Anregungslichtquelle, mit einem ersten Objektiv zum Fokussieren des Anregungslichtstrahls auf den Fokuspunkt, mit einer den Abregungslichtstrahl abgebenden Abregungslichtquelle, mit einem den Abregungslichtstrahl in die Teilstrahlen aufspaltenden Strahlteiler, wobei einer der Teilstrahlen durch das erste Objektiv auf den Fokuspunkt fokussiert wird, und mit mindestens einem zweiten Objektiv zum Fokussieren eines anderen der Teilstrahlen aus einer anderen Richtung auf den Fokuspunkt, um die Teilstrahlen zur Interferenz zu bringen.

Bereits 1873 hat Ernst Abbe herausgefunden, dass von einer Lichtquelle einfallende Lichtstrahlen mit einer Linse tatsächlich nicht in einen nulldimensionalen Fokuspunkt ohne räumliche Ausdehnung, sondern nur in einen im Regelfall zigarrenförmigen Fokusbereich um den geometrischen Fokuspunkt fokussiert werden kann. Die minimale Abmessung des Fokusbereichs beträgt etwa Lambda/(2n), wobei Lambda die Wellenlänge des Lichts und n den Brechungsindex angibt. Diese Grenze wirkt sich auf verschiedenen technischen Gebieten aus. Konkret überall dort, wo kontaktlos mit Licht auf einen räumlich begrenzten Bereich konzentriert werden soll, beispielsweise in der Lichtmikroskopie, der Lithographie oder dem Beschreiben von optischen Datenspeichermedien.

Auf dem Gebiet der Fluoreszenzmikroskopie ist es aus der EP 0 801 759 B1 bekannt, den Bereich, in dem eine Probe zur spontanen Emission von separat detektierbarem Fluoreszenzlicht angeregt wird, effektiv dadurch zu verkleinert, dass ein Fokusbereich eines Anregungslichtstrahls teilweise mit den Fokusbereichen von Stimulationslichtstrahlen überlagert wird, die eine stimulierte Emission der Probe hervorrufen, wodurch der angeregte Energiezustand der Probe, aus dem hieraus die spontane Emission von Fluoreszenzlicht erfolgt, wieder abgeregt wird. Eine Trennung des interessierenden spontan emittierten Fluoreszenzlichts von dem Licht aufgrund der stimulierten Emission kann aufgrund unterschiedlicher Wellenlänge oder unterschiedlicher Zeitpunkte der Emission erfolgen. Das aus dem effektiv verkleinerten Fokusbereich des Anregungslichtstrahls aufgefangene spontan emittierte Fluoreszenzlicht stammt aus einem Bereich, der kleiner als der tatsächliche Fokusbereich des Anregungslichtstrahls ist.

Ein weiterer Ansatzpunkt zur Verkleinerung des effektiven Fokusbereichs eines Lichtstrahls ist es, in dem Fokusbereich ein Interferenzmuster zu erzeugen, wozu der Anregungslichtstrahl in Teilstrahlen aufgespalten wird und die Teilstrahlen aus unterschiedlichen, vorzugsweise entgegengesetzten Richtungen in dem Fokusbereich miteinander überlagert werden. Die Abgrenzungen der Intensitätsmaxima dieses Interferenzmusters haben eine Untergrenze von Lambda/4n. Typischerweise treten bei einem Intensitätsmaximum am Fokuspunkt aber auch noch zwei weitere Intensitätsmaxima vor und hinter dem Fokuspunkt in dem gemeinsamen Fokusbereich der beiden Teilstrahlen auf.

Um diese Nebenmaxima auszuschalten ist es aus Stefan W. Hell: "Increasing the Resolution of Far-Field Fluorescence Light Microscopy by Point-Spread-Function Engineering" in "Topics in Flurescence Spectroscopy"; Volume 5: "Nonlinear and Two-Photon-Induced Fluorescence", edited by J. Lakowicz, Plenum Press, New York, 1997 als Verfahren der eingangs beschriebenen Art bekannt, dem Interferenzmuster der Teilstrahlen des Anregungslichtstrahls ein Interferenzmuster von Teilstrahlen eines Stimulationslichtstrahls zu überlagern, wobei das Interferenzmuster des Stimulationslichtstrahls ein Minimum in dem Fokuspunkt aufweist und wobei die Wellenlänge des Stimulationslichtstrahls doppelt so groß ist wie die Wellenlänge des Anregungslichtstrahls. Auf diese Weise überdecken sich die vor und hinter dem Fokuspunkt liegenden Maxima des Stimulationslichtstrahls mit den Nebenmaxima des Anregungslichtstrahls, so dass effektiv nur das Hauptmaximum des Anregungslichtstrahls am Fokuspunkt zu der spontanen Emission angeregt wird, deren Fluoreszenzlicht detektiert wird. Die Beschränkung auf Fälle, in denen das Stimulationslicht die doppelte Wellenlänge wie das Anregungslicht hat, stellt einen erheblichen Nachteil dar. Darüber hinaus ist eine Vorrichtung zur Realisierung dieses Verfahrens durch einen extremen Justieraufwand gekennzeichnet, weil sowohl der Anregungslichtstrahl als auch der Stimulationslichtstrahl in Teilstrahlen aufgespalten und aus entgegengesetzten Richtungen in demselben Fokusbereich fokussiert werden muss und gleichzeitig die relative Phasenlage beider Teilstrahlenpaare zu dem Fokuspunkt eingestellt werden muss. So ist eine entsprechende Vorrichtung bis heute tatsächlich nicht realisiert worden, obwohl sie potentiell die Möglichkeit eröffnet, den effektiven Bereich der Anregung einer Probe durch den Anregungslichtstrahl weit unter die Grenze von Lambda/2n abzusenken.

Die vorliegende Erfindung beschränkt sich nicht auf Anwendungen bei Fluoreszenzmikroskopen. Sie erstreckt sich vielmehr auf alle Fälle, in denen ein optischer Übergang durch Anregungslicht anregbar ist, wobei der optische Übergang durch Abregungslicht auf irgendeine Weise beeinflussbar ist. Dies schließt den Fall ein, dass mit dem Abregungslicht ein Energiezustand durch stimulierte Emission wieder abgeregt wird. Es ist aber auch eingeschlossen, dass das Abregungslicht einen Grundzustand entvölkert, aus dem allein heraus der optische Übergang mit dem Anregungslicht angeregt werden könnte. Auch kann der anzuregende optische Übergang einen photochemischen Prozess auslösen, der durch das Abregungslicht auf irgendeine Weise verhindert oder zumindest behindert wird. Dem Begriff des Abregungslichts bzw. dem des Abregungslichtstrahls kommt daher im Rahmen dieser Beschreibung keine andere Bedeutung zu, als dass der anzuregende optische Übergang auf irgendeine Weise beeinflusst wird. Für die Erfindung kommt es dabei darauf an, den effektiven Bereich der Anregung des optischen Übergangs durch Einsatz des Abregungslichtstrahls zu verkleinern. Dies bedeutet beispielsweise nicht, dass die Überlagerung des Abregungslichtstrahls mit dem Anregungslichtstrahl ein zeitgleiches Einfallen in den Fokusbereich erfordert, solange die gewünschte Wirkung des Abregungslichtstrahls bei einer zeitlichen Abfolge noch gegeben ist.

Die Aufgabe der vorliegenden Erfindung ist es, ein Verfahren und eine Vorrichtung der eingangs beschriebenen Art aufzuzeigen, mit denen es möglich ist, den Bereich der effektiven Anregung des optischen Übergangs durch den Anregungslichtstrahl auf Abmessungen deutlich kleiner Lambda/2n zu reduzieren, ohne dass hierfür ein hoher Justieraufwand erforderlich ist, der einer Realisation entgegen steht.

Bei einem Verfahren der eingangs beschriebenen Art wird diese Aufgabe erfindungsgemäß dadurch gelöst, dass die Wellenfronten der aus entgegengesetzten Richtungen auf den Fokuspunkt fokussierten Teilstrahlen des Abregungslichtstrahls vor dem Fokussieren auf den Fokuspunkt in gleicher Weise aberriert werden, so dass auf jeder der Seiten des Fokuspunkts die Intensitätsmaxima des Interferenzmusters räumlich aufgeweitet werden, ohne das Intensitätsminimum am Fokuspunkt zu beseitigen.

Bei dem neuen Verfahren wird der Fokusbereich des Anregungslichtstrahls mit dem Interferenzmuster des mit sich selbst zur Interferenz gebrachten Abregungslichtstrahls überlagert, wobei die sich beiderseits des Fokuspunkts ausbildenden Intensitätsmaxima des Interferenzmusters so ausgeschmiert werden, dass effektiv nur eine Anregung des anzuregenden optischen Übergangs in einem eng begrenzten Bereich um den Fokuspunkt erfolgt, in dem das Interferenzmuster des Abregungslichtstrahls ein Intensitätsminimum aufweist. Dieses Intensitätsminimum bleibt aus Symmetriegründen durch die Aberrationen der Wellenfronten der Teilstrahlen des Anregungslichtstrahls weitgehend unbeeinflusst. Die Aberrationen der Wellenfronten wirken sich aber vor und hinter dem Fokuspunkt, an dem keine absolute Symmetrie zwischen den Teilstrahlen gegeben ist, aus, indem die Intensitätsmaxima des Interferenzmusters ihre enge räumliche Begrenzung verlieren und sich ausdehnen, so dass der gesamte Fokusbereich des Anregungslichtstrahls außerhalb des Intensitätsminimums des Interferenzmusters am Fokuspunkt erfassbar ist. So konzentriert sich die effektive Anregung des anzuregenden optischen Übergangs auf einen kleinen Bereich um den Fokuspunkt, dessen Abmessungen weit unter die Grenze von Lambda/2n fallen. Erreichbar sind Ortsauflösungen im Bereich von Lambda/10 und besser.

Bei dem neuen Verfahren ist es bevorzugt, wenn die Teilstrahlen des Abregungslichtstrahl aus einander diametral entgegengesetzten Richtungen auf den Fokuspunkt fokussiert werden, um das Interferenzmuster auszubilden. Bei der möglichen Verwendung von mehr als zwei Objektiven zur Fokussierung des Anregungslichtstrahls und der Teilstrahlen des Abregungslichtstrahls kann aber beispielsweise auch ein Winkel im Bereich von 80 bis 120° zwischen den Teilstrahlen vorliegen.

Bei dem neuen Verfahren wird der Anregungslichtstrahl in dem Fokusbereich vorzugsweise nicht mit sich selbst zur Interferenz gebracht, weil dies ohne einen zusätzlichen wesentlichen Vorteil ist. Gleichzeitig erhöht es aber den Justieraufwand bei der Durchführung des neuen Verfahren deutlich, weil dann zwei Interferenzmuster zueinander justiert werden müssen.

Ein Kriterium für eine ausreichende Ausweitung der Intensitätsmaxima des Interferenzmusters des Abregungslichtstrahls, um den Fokusbereich des Anregungslichtstrahls außerhalb des Fokuspunkts abzudecken, besteht darin, dass das erste und das zweite Intensitätsmaximum auf jeder Seite des Fokuspunkts überlappen. Dies bedeutet, dass eine Intensitätsnullstelle zwischen dem ersten und dem zweiten Intensitätsmaximum auf jeder Seite des Fokuspunkts verschwindet.

Um die Symmetrie beim Erhalten des Intensitätsminimums des Interferenzmusters der aberrierten Teilstrahlen des Abregungslichtstrahls an dem Fokuspunkt voll auszunutzen, werden die Wellenfronten der Teilstrahlen vorzugsweise in gleicher Weise aberriert.

Auf identische und einfache Weise werden die Wellenfronten der Teilstrahlen aberriert, indem die Wellenfronten des Abregungslichtstrahls vor seiner Aufspaltung in die Teilstrahlen aberriert werden. Hierdurch ist eine vollkommen identische Aberration der Wellenfronten beider Teilstrahlen gegeben, so dass keinerlei Gefahr besteht, dass das Intensitätsminimum im Interferenzmuster der Teilstrahlen am Fokuspunkt Schaden nimmt.

Beim Aberrieren der Wellenfronten der Teilstrahlen des Abregungslichtstrahls kann beispielsweise ein zentraler Bereich der Wellenfronten gegenüber ihrem Randbereich phasenverschoben werden.

Wenn beim Aberrieren der Wellenfronten der Teilstrahlen des Abregungslichtstrahls Bereiche der Wellenfronten gegeneinander phasenverschoben werden, ist es bevorzugt, eine Phasenverschiebung um mehr als die Kohärenzlänge des Abregungslichtstrahls vorzunehmen, damit das Abregungslicht aus den einzelnen Bereichen nicht mehr destruktiv interferieren kann. So werden die Intensitätsminima des Interferenzmusters der nicht aberrierten Teilstrahlen besonders effektiv in ihrer Intensität angehoben. Bei einem gepulsten Abregungslichtstrahl ist seine Kohärenzlänge mit seiner Pulslänge gleichbedeutend.

Vorzugsweise werden die Teilstrahlen bei dem neuen Verfahren mit identischen Optiken auf den Fokuspunkt fokussiert. Dabei sind die Optiken unter dem Gesichtspunkt einer großen, möglichst weit über 1,0 hinausgehenden numerischen Apertur auszuwählen. Bevorzugt ist ein halber Aperturwinkel von größer als 58°. Da auch der Anregungslichtstrahl durch eine der beiden Optiken auf den Fokuspunkt fokussiert wird, weist der Fokusbereich des Anregungslichtstrahls so bereits möglichst geringe räumlich Abmessungen in Richtung der optischen Achse auf. Auf dieses Gebiet konzentriert sich auch das Interferenzmuster der beiden Teilstrahlen.

Bei dem neuen Verfahren können sich der Anregungslichtstrahl und der Abregungslichtstrahl in ihrer Wellenlänge und/oder dem Zeitpunkt ihres Einfallens in den Fokusbereich und/oder der Form von von ihnen ausgebildeten Laserpulsen unterscheiden. Insbesondere kann ein einziger Laser sowohl als Teil einer Anregungslichtquelle für den Anregungslichtstrahl als auch als Teil einer Abregungslichtquelle für den Abregungslichtstrahl verwendet werden.

Die räumliche Auflösung des neuen Verfahrens kann zusätzlich dadurch verbessert werden, indem Lichtintensitäten eines weiteren Abregungslichtstrahls in dem Fokusbereich dem Anregungslichtstrahl überlagert werden. Dabei kann es sich um einen weiteren Abregungslichtstrahl handeln, der sich nur in der Art der Aberration der Wellenfronten seiner Teilstrahlen von dem ersten Abregungslichtstrahl unterscheidet, so dass auch mit ihm das neue Verfahren realisiert wird. Es kann sich aber auch um einen Abregungslichtstrahl handeln, bei dem die Wellenfronten seiner Teilstrahlen nicht aberriert werden oder der gar nicht zur Ausbildung eines Interferenzmusters in Teilstrahlen aufgespalten wird, so das er im wesentlichen von den aus dem Stand der Technik bekannten Prinzipien gebraucht macht. Der Einsatz eines weiteren Abregungslichtstrahls ist insbesondere zur Begrenzung des Bereichs der effektiven Anregung durch den Anregungslichtstrahl in radialer Richtung zu dessen Achse als sinnvolle Ergänzung zu der axialen Begrenzung denkbar, die das Hauptanliegen des neuen Verfahrens darstellt. Dazu ist ein einfacher, d.h. nicht mit sich selbst zur Interferenz gebrachter, weiterer Anregungslichtstrahl einsetzbar, dessen Kembereich so ausgeblendet wird, dass sein verbleibender Rest nach dem Fokussieren eine Doughnut-förmige Intensitätsverteilung um den Fokuspunkt aufweist und der so die effektive Anregung durch den Anregungslichtstrahl in allen radialen Richtungen zu dessen Achse begrenzt.

Eine andere Ergänzung des neuen Verfahrens ist es, die Verfahrensschritte in mehreren neben- und/oder hintereinander liegenden Fokusbereichen gleichzeitig durchzuführen. Dies kann beispielsweise durch Aufspalten des Anregungslichtstrahls und des Abregungslichtstrahls in mehrere nebeneinander verlaufende Teilstrahlen erfolgen, die in den mehreren Fokusbereichen fokussiert werden. Bekannte Mittel für eine derartige Strahlaufspaltung sind Lochblenden- und Mikrolinsenarrays.

In einer konkreten Ausführungsform des neuen Verfahrens wird der Anregungslichtstrahl zur Anregung einer Probe zur spontanen Emission von Fluoreszenzlicht und der Abregungslichtstrahl zur Veränderung der Anregung oder zur Auslösung von stimulierter Emission der Probe verwendet, wobei das spontan emittierte Fluoreszenzlicht konfokal detektiert wird. Dieses Vorgehen entspricht einer Fluoreszenzmikroskopie. Zur Separierung des spontan emittierten Fluoreszenzlichts kann neben wellenlängenselektiven optischen Elementen auch eine definierte Zeitabfolge verwendet werden, bei der das spontan emittierte Fluoreszenzlicht erst nach dem Abklingen des Abregungslichtstrahls detektiert wird, der seinerseits auf den Anregungslichtstrahl folgt oder zumindest später als dieser abklingt. Derartige Synchronisationsmaßnahmen sind aber an sich bekannt.

Der Anregungslichtstrahl kann aber auch zur Anregung eines Zustands, der Ausgangszustand eines photochemischen Prozesses ist, und der Abregungslichtstrahl zur Verhinderung dieses photochemischen Prozesses verwendet werden. So können beispielsweise optische Datenträger beschrieben werden.

Eine Vorrichtung der eingangs beschriebenen Art ist erfindungsgemäß dadurch gekennzeichnet, dass im Strahlengang der beiden aus entgegengesetzten Richtungen auf dem Fokuspunkt fokussierten Teilstrahlen vor dem jeweiligen Objektiv ein optisches Element angeordnet ist, das die Wellenfronten aberriert.

Vorzugsweise fokussieren das erste Objektiv und das zweite Objektiv die Teilstrahlen aus einander entgegengesetzten Richtungen auf den Fokuspunkt.

Weiterhin ist es bevorzugt, wenn die möglichen Strahlengänge so angelegt sind, dass der Anregungslichtstrahls nicht anteilig auch über das zweite Objektiv in den Fokusbereich gelangt.

Das die Wellenfronten aberrierende optische Element kann vor dem Strahlteiler in dem Abregungslichtstrahl angeordnet sein.

Das die Wellenfronten aberrierende optische Element kann ein optisches Element aufweisen, das die Phase des Abregungslichts über die Wellenfronten hinweg variiert. Eine mögliche Ausführungsform des aberrierenden optischen Elements weist beispielsweise eine Phasenverzögerungsplatte in seinem Zentrum auf, wodurch eine Phasenstufe in die Wellenfronten eingeführt wird. Es sind aber auch andere optische Elemente einsetzbar, die andere Aberrationen der Wellenfronten bewirken, beispielsweise Verkippungen oder auch Krümmungen der Wellenfronten.

Besonders bevorzugt sind die Wellenfronten aberrierende optische Elemente, die computeradressierbar sind, um eine gewünschte Aberration einzustellen. Derartige optische Elemente sind in Form von aktiven optischen Spiegeln, beispielsweise als Membranspiegel mit mechanischen Stellelementen, und von ferroelektrischen optischen Elementen, beispielsweise als Flüssigkristallelemente, bekannt und verfügbar.

Vorzugsweise sind die beiden Objektive der neuen Vorrichtung identisch und weisen einen halben Aperturwinkel von größer als 58° auf. Um das Intensitätsminimum des Interferenzmusters der Teilstrahlen der Abregungslichtstrahls auf den Fokuspunkt zu justieren, ist in dem Strahlengang eines der Teilstrahlen ein Phasenjustierelement anzuordnen. Hierzu zählt auch ein Phasenjustierelement in Form eines mit einem Piezoaktuator verschieblichen Strahlteilers, dessen Verschiebung sich nur auf die Lauflänge eines der Teilstrahlen auswirkt.

In einer bevorzugten Ausführungsform der neuen Vorrichtung ist nur eine aktive Lichtquelle vorgesehen, die unmittelbar entweder als Anregungslichtquelle oder als Abregungslichtquelle dient. Zur Ausbildung der jeweils anderen Lichtquelle kann dabei ein passives nichtlineares optisches Element eingesetzt werden. Die aktive Lichtquelle ist z. B. ein gepulster Laser und das passive nichtlineare optische Element ein frequenzverdoppelnder Kristall oder ein optisch-parametrischer Oszillator.

In der praktischen Anwendung der neuen Vorrichtung ist es wichtig, die Teilstrahlen des Abregungslichtstrahls auf gleiche Intensität einzustellen, damit das Interferenzmuster tatsächlich eine Intensitätsnullstelle am Fokuspunkt ausbilden kann. Zu dem Abgleich der Intensitäten der Teilstrahlen kann in mindestens einem der beiden Teilstrahlen ein einstellbares Intensitätsabschwächungsmitiel angeordnet sein. Dabei kann es sich um eine Küvette mit einer Lösung aus einem absorbierenden Material handeln. Geeignet ist beispielsweise Kupfersulfat.

Zur Realisation eines Fluoreszenzmikroskops als Ausführungsform der neuen Vorrichtung kann ein Detektor zum Auffangen von Fluoreszenzlicht in konfokaler Anordnung zu dem Fokuspunkt angeordnet sein.

Die Erfindung wird im folgenden anhand eines Ausführungsbeispiels, das sich auf die Ausbildung eines Fluoreszenzmikroskops bezieht, das aber insoweit nicht als Beschränkung der Erfindung zu interpretieren ist, näher erläutert und beschrieben, dabei zeigt
- Fig. 1: den prinzipiellen Aufbau der neuen Vorrichtung,
- Fig. 2: die Aberration von Wellenfronten in der neuen Vorrichtung,
- Fig. 3: ein erstes mit der neuen Vorrichtung erzieltes Messergebnis im Vergleich mit dem Messergebnis eines konfokalen Fluoreszenzmikroskops und
- Fig. 4: ein zweites mit der neuen Vorrichtung erzieltes Messergebnis wieder im Vergleich mit dem Messergebnis eines konfokalen Fluoreszenzmikroskops.

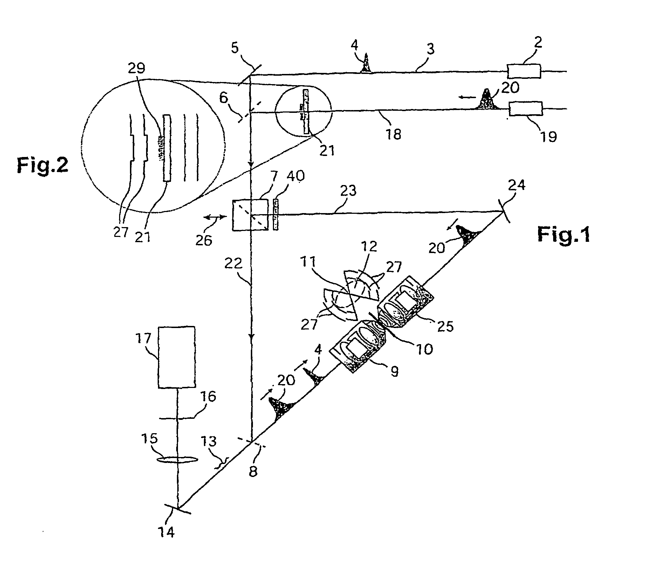

Die in Fig. 1 schematisch dargestellte Vorrichtung 1 weist eine Anregungslichtquelle 2 auf, die einen Anregungslichtstrahl 3 abgibt. Die Anregungslichtquelle 2 liefert Laserpulse 4 mit einer Wellenlänge von 554 nm und einer Pulsdauer von 250 fs abgibt. Der Anregungslichtstrahl 3 wird über einen Spiegel 5, durch einen ersten dichroitischen Spiegel 6 und einen Strahlteiler 7 sowie über einen zweiten dichroitischen Spiegel 8 in ein erstes Objektiv 9 eingeleitet und von dem Objektiv 9 im Bereich einer Probe 10 auf einen Fokuspunkt 11, der hier in einer vergrößerten Detaildarstellung neben der Probe 10 angedeutet ist, fokussiert. Ein von dem Anregungslichtstrahl 3 in dem Strahlteiler 7 abgeteilter Teilstrahl wird dabei von einem wellenlängenselektiven Element 40 abgeblockt, das Licht mit der Wellenlänge de Anregungslichtstrahls 13 nicht durchlässt. Aufgrund der Beugungsgrenze wird der Anregungslichtstrahl 3 von dem Objektiv 9 tatsächlich nicht auf den nulldimensionalen Fokuspunkt 11 sondern in einen Fokusbereich 12 fokussiert, der eine gewisse räumliche Ausdehnung, insbesondere in Richtung der optischen Achse des Objektivs 9 aufweist. In dem gesamten Fokusbereich 12 erfolgt eine Anregung der Probe 10 in einen angeregten Energiezustand, aus dem heraus die Probe 10 spontan Fluoreszenzlicht 13 emittiert, das zurück durch das Objektiv 9 und den dichroitischen Spiegel, dessen Durchlasswellenlänge auf die Wellenlänge des Fluoreszenzlichts 13 abgestimmt ist, und über einen Spiegel 14 sowie durch eine Linse 15 und eine Lochblende 16 in einen Detektor 17 gelangt. Die Lochblende 16 ist konfokal zu dem Fokuspunkt 11 angeordnet, um die Ortsauflösung bei der Registrierung des Fluoreszenzlichts mit dem Detektor 17 zu erhöhen. Die wesentliche Verbesserung der lokalen Auflösung bei der Detektion des Fluoreszenzlichts wird hier aber mit Hilfe eines Abregungslichtstrahls 18 erreicht, der von einer Abregungslichtquelle 19 kommt. Die Abregungslichtquelle 19 gibt Laserpulse 20 von 13 ps Dauer und mit einer Wellenlänge im Bereich von 750 nm ab. Während die Wellenlänge des Anregungslichtstrahls 3 auf eine Anregung eines Energiezustands der Probe 10 abgestimmt ist, aus dem heraus die Probe spontan Fluoreszenzlicht emittiert, ist die Wellenlänge des Abregungslichtstrahls 18 so gewählt, dass eine stimulierte Emission der Probe 10 ausgelöst wird, die den angeregten Energiezustand wieder abregt. Durch eine Überlagerung des Abregungslichtstrahls 18 mit dem Anregungslichtstrahl 3 in dem Fokusbereich 12 auf bestimmte Weise kann der Bereich, aus dem der Detektor 17 Fluoreszenzlicht 13 empfängt, lokal auf einen engen Bereich um den Fokuspunkt 11 eingegrenzt werden. Dabei kann der Detektor 17 oder ein (nicht dargestelltes) vorgeschaltetes optisches Element die stimulierte Emission der Probe 10 aufgrund einer von dem Fluoreszenzlicht 13 abweichenden Wellenlänge unterscheiden, oder es kann eine zeitliche Unterscheidung vorgenommen werden, indem zunächst ein Laserpuls 4 des Anregungslichtstrahls 3 und dann ein Laserpuls 20 des Abregungslichtstrahls 18 auf die Probe 10 abgestrahlt wird und erst anschließend, nachdem der Laserpuls 20 und die durch ihn ausgelöste stimulierte Emission der Probe 10 abgeklungen sind, der Detektor 17 zum Empfangen des spontan emittierten Fluoreszenzlichts von der Probe 10 aktiviert wird.

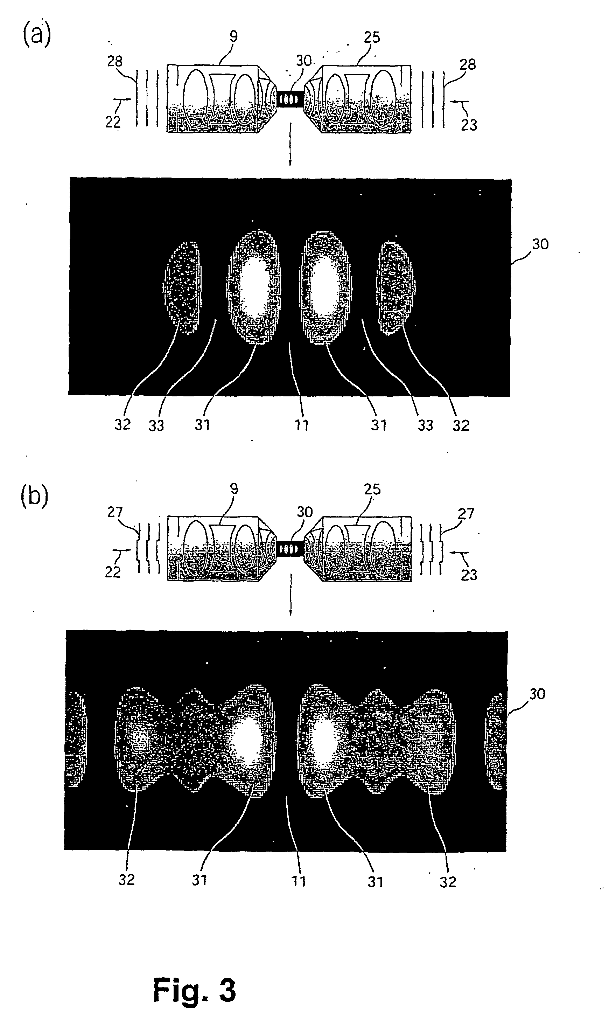

Um mit dem Abregungslichtstrahl 18 die Probe zwar überall außerhalb des Fokuspunkts 11 wieder abzuregen, aber an dem Fokuspunkt 11 unbeeinflusst zu lassen, wird der Abregungslichtstrahl 18 zunächst durch ein optisches Element 21 geführt, das seine Wellenfronten aberriert. Anschließend wird der Abregungslichtstrahl 18 durch den dichroitischen Spiegel 6, der bei der Wellenlänge des Abregungslichtstrahls 18 reflektiert mit dem Anregungslichtstrahl 3 zusammengeführt. In dem Strahlteiler 7 wird der Abregungslichtstrahl 18 in zwei Teilstrahlen 22 und 23 aufgespalten. Der Teilstrahl 22 wird wie der Anregungslichtstrahl geführt. Der Teilstrahl 23 gelangt durch das bei der Wellenlänge des Abregungslichtstrahls 18 durchlässige wellenlängenselektive Element 40 und über einen Spiegel 24 zu einem zweiten Objektiv 25, das identisch zu dem Objektiv 9 ausgebildet ist. Von dem Objektiv 25 wird der Teilstrahl 23 auf den Fokuspunkt 11 fokussiert. Auf diese Weise wird der Abregungslichtstrahl in Form seiner Teilstrahlen 22 und 23 in dem Fokusbereich 12 mit sich selbst überlagert. Es kommt zu einem Interferenzmuster. Die Phasenlage des Interferenzmusters zu dem Fokuspunkt 11 wird so eingestellt, dass sich an den Fokuspunkt 11 ein Intensitätsminimum ausbildet. Dies geschieht durch Verschieben des Strahlteilers 7 in Richtung eines Doppelpfeil 26, beispielsweise mit einem Piezoaktuator. Die Verschiebung des Strahlteilers 26 wirkt sich nur auf den Strahlengang des Teilstrahls 23 aus und damit auf die relative Phasenlage der Teilstrahlen 22 und 23 zueinander. Das Interferenzmuster der Teilstrahlen 22 und 23 ist durch ihre aberrierten Wellenfronten 27 in dem Sinne verzeichnet, dass die Intensitätsmaxima auf beiden Seiten des Fokuspunkts 11 ausgeschmiert sind, so dass sie ineinander übergehen, so dass die Intensitätsminima höherer Ordnung des Interferenzmusters in der Intensität angehoben werden. Dies wird weiter unten im Zusammenhang mit Fig. 3 näher erläutert.

Fig. 2 zeigt die Wirkungsweise des optischen Elements 21 auf ankommende ebene Wellenfronten 28 des Abregungslichtstrahls 18. Durch eine Phasenplatte 29 im Zentrum des optischen Elements 21 wird die Phase der Wellenfronten 28 lokal verzögert, woraus die stufenförmigen aberrierten Wellenfronten 27 resultieren, welche neben dem Fokuspunkt 11 in Fig. 1 angedeutet sind. Andere Aberrationen sind aber in gleicher Weise nutzbar und geeignet. Entscheidend ist, dass die ebenen Wellenfronten hinreichend verformt werden, um die Intensitätsmaxima im Interferenzmuster der Teilstrahlen 22 und 23 beiderseits des Fokuspunkts 11 zur Überlappung zu bringen.

Fig. 3 zeigt in dem oberen Teil (a) die Entstehung eines Interferenzmusters 30 aus über die Objektive 9 und 25 gemäß Fig. 1 an den Fokusbereich 12 einfallenden ebenen Wellenfronten 28. Dabei ist zu erkennen, dass sich beiderseits des Fokuspunkts 11 in der Mitte des Interferenzmusters 30 jeweils 2 Intensitätsmaxima 31 und 32 erster bzw. zweiter Ordnung ausbilden. Diese Intensitätsmaxima sind durch dazwischen liegende Intensitätsminima 33 scharf voneinander getrennt. Demgegenüber skizziert Fig. 3 (b), unten den Effekt, der durch die aberrierten Wellenfronten 27 auf das Interferenzmuster 30 erzielt wird. Die Intensitätsmaxima 31 und 32 erster und zweiter Ordnung werden von dem Fokuspunkt 11 weg etwas auseinander gezogen und vor allem soweit aufgeweitet, dass sie in dem Bereich des bislang zwischen Ihnen befindlichen Intensitätsminimums 33 gemäß Fig. 3 (a) überlappen und die Intensität des Abregungslichts dort angehoben wird. Aus Symmetriegründen bleibt aber das Intensitätsminimum an dem Fokuspunkt 11 bestehen. Durch das Interferenzmuster 30 gemäß Fig. 3 (b) kann somit die Anregung der Probe 10 in dem gesamten Fokusbereich 12 gemäß Fig. 1 bis auf den Bereich unmittelbar um den Fokuspunkt 11 wieder zurückgeführt werden. Entsprechend kann Fluoreszenzlicht detektiert werden, dessen Ursprung auf einen engen Bereich um den Fokuspunkt 11 konzentriert ist.

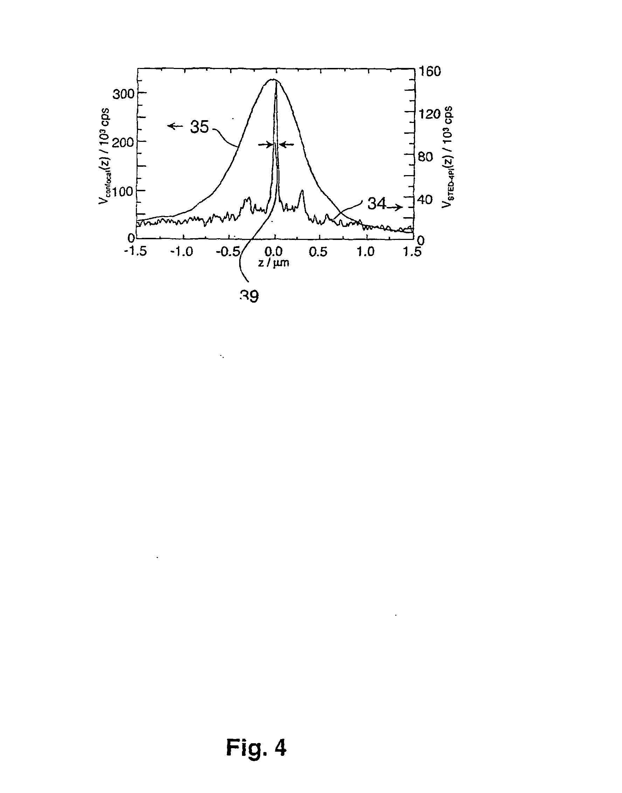

Fig. 4 zeigt als Beispiel das Signal des Detektors 17 über der Probentiefe z in Mikrometern bei Verwendung von Wasserimmersions-Objektiven 9 und 25 mit einer numerischen Apertur von 1,2 im Fall einer dünnen Fluoreszenzschicht in der Probe. Das Detektorsignal 34 der Vorrichtung 1 gemäß Fig. 1 ist dabei dem Detektorsignal 35 eines entsprechenden konfokalen Fluoreszenzmikroskops gegenüber gestellt. Auffällig ist die deutlich geringere Halbwertsbreite 39 des Signals 34 um die Lage der Fluoreszenzschicht. Die Halbwertsbreite beträgt hier nur 46 +/- 5 nm. Dies ist deutlich kleiner als ein Zehntel der Wellenlänge des Anregungslichtstrahls. Die Halbwertsbreite des Signals 35 des konfokalen Fluoreszenzmikroskops ist um eine Größenordnung größer.

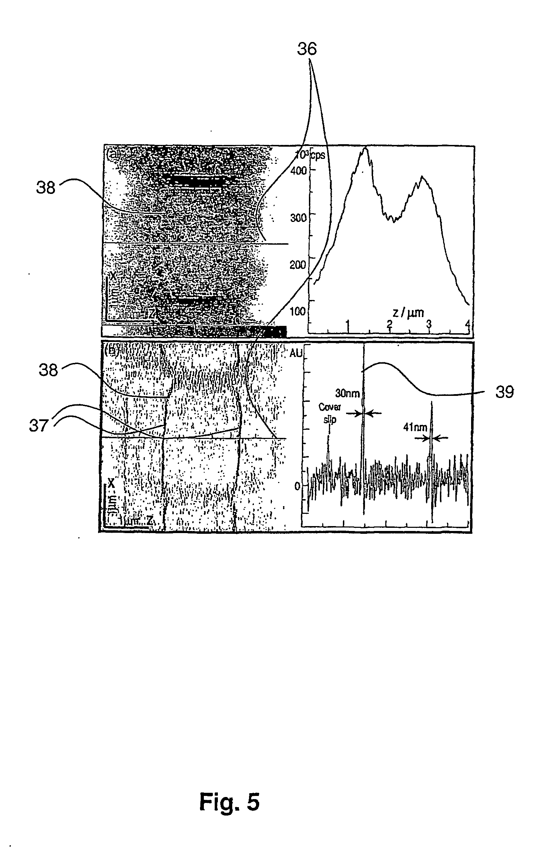

Fig. 5 zeigt Bilder eines Bakteriums, dessen Membranen mit Fluoreszenzfarbstoff markiert sind. Fig. 5 (a) zeigt dabei links ein zweidimensionales Bild des Bakteriums und rechts den Signalverlauf entlang einer in dem Bild des Bakteriums eingezeichneten Linie 36, die jeweils mit einem konfokalen Fluoreszenzmikroskop aufgezeichnet wurden. Fig. 5 (b) zeigt im Vergleich dazu entsprechende Aufnahmen mit der Vorrichtung 1 gemäß Fig. 1. Hier werden die Membranen 37 des Bakteriums 38 viel besser und schärfer aufgelöst. Durch eine lineare Filterung des Signals gemäß Fig. 5 (b) kann eine noch größere Auflösungsverbesserung erreicht werden.

### BEZUGSZEICHENLISTE

- 1 -: Vorrichtung
- 2 -: Anregungslichtquelle
- 3 -: Anregungslichtstrahl
- 4 -: Laserpuls
- 5 -: Spiegel
- 6 -: Spiegel
- 7 -: Strahlteiler
- 8 -: Spiegel
- 9 -: Objektiv
- 10 -: Probe

- 11 -: Fokuspunkt
- 12 -: Fokusbereich
- 13 -: Fluoreszenzlicht
- 14 -: Spiegel
- 15 -: Linse
- 16 -: Lochblende
- 17 -: Detektor
- 18 -: Abregungslichtstrahl
- 19 -: Abregungslichtquelle
- 20 -: Laserpuls

- 21 -: optisches Element
- 22 -: Teilstrahl
- 23 -: Teilstrahl
- 24 -: Spiegel
- 25 -: Objektiv
- 26 -: Doppelpfeil
- 27 -: aberrierte Wellenfront
- 28 -: Wellenfront
- 29 -: Phasenplatte
- 30 -: Interferenzmuster

- 31 -: Intensitätsmaximum
- 32 -: Intensitätsmaximum
- 33 -: Intensitätsminimum
- 34 -: Detektorsignal
- 35 -: Detektorsignal
- 36 -: Linie
- 37 -: Membran
- 38 -: Bakterium
- 39 -: Halbwertsbreite
- 40 -: wellenlängenselektives Element

## Patentansprüche

1. Verfahren zum räumlich eng begrenzten Anregen eines optischen Übergangs, wobei ein sich über einen Fokuspunkt (11) hinweg erstreckender Fokusbereich (12) eines Anregungslichtstrahls (3) dessen Wellenlänge auf den anzuregenden optischen Übergang abgestimmt ist, mit einem räumlichen, ein Intensitätsminimum an dem Fokuspunkt (11) und mehrere Intensitätsmaxima auf verschiedenen Seiten des Fokuspunkts (11) aufweisenden Interferenzmuster eines den optischen Übergang auf irgendeine Weise beeinflussenden, in Teilstrahlen (22,23) aufgespaltenen und in dem Fokusbereich (12) in Form seiner fokussierten Teilstrahlen (22,23) aus unterschiedlichen Richtungen mit sich selbst zur Interferenz gebrachten Abregungslichtstrahls (18) überlagert wird, **dadurch gekennzeichnet, dass** die Wellenfronten (28) der aus unterschiedlichen Richtungen auf den Fokuspunkt (11) fokussierten Teilstrahlen (22, 23) vor dem Fokussieren auf den Fokuspunkt (11) aberriert werden, so dass auf jeder der Seiten des Fokuspunkts (11) die Intensitätsmaxima (31, 32) des Interferenzmusters (30) räumlich aufgeweitet werden, ohne das Intensitätsminimum am Fokuspunkt (11) zu beseitigen.

2. Verfahren nach Anspruch 1, **dadurch gekennzeichnet, dass** die Teilstrahlen (22, 23) aus entgegengesetzten Richtungen auf den Fokuspunkt (11) fokussiert werden.

3. Verfahren nach Anspruch 1 oder 2, **dadurch gekennzeichnet, dass** der Anregungslichtstrahl (3) in dem Fokusbereich (12) nicht mit sich selbst zur Interferenz gebracht wird.

4. Verfahren nach einem der Ansprüche 1 bis 3, **dadurch gekennzeichnet, dass** die Intensitätsmaxima (31, 32) des Interferenzmusters (30) so weit räumlich aufgeweitet werden, dass eine Intensitätsnullstelle zwischen dem ersten und dem zweiten Intensitätsmaximum (31, 32) auf jeder Seite des Fokuspunkts (11) verschwindet.

5. Verfahren nach einem der Ansprüche 1 bis 4, **dadurch gekennzeichnet, dass** die Wellenfronten (28) der Teilstrahlen (22, 23) des Abregungslichtstrahls (18) in gleicher Weise aberriert werden, indem die Wellenfronten (28) des Abregungslichtstrahls (18) vor seiner Aufspaltung in die Teilstrahlen (22, 23) aberriert werden.

6. Verfahren nach einem der Ansprüche 1 bis 5, **dadurch gekennzeichnet, dass** beim Aberrieren der Wellenfronten (28) der Teilstrahlen (22, 23) des Abregungslichtstrahls (18) Bereiche der Wellenfronten (28) um mehr als die Kohärenzlänge des Abregungslichtstrahls (18) gegeneinander phasenverschoben werden.

7. Verfahren nach einem der Ansprüche 1 bis 6, **dadurch gekennzeichnet, dass** der Anregungslichtstrahl (3) zur Anregung einer Probe (10) zur spontanen Emission von Fluoreszenzlicht (13) und der Abregungslichtstrahl (18) zur Verhinderung der Anregung oder zur Auslösung von stimulierter Emission der Probe (10) verwendet wird, wobei das spontan emittierte Fluoreszenzlicht (13) konfokal detektiert wird.

8. Verfahren nach einem der Ansprüche 1 bis 7, **dadurch gekennzeichnet, dass** der Anregungslichtstrahl (3) zur Anregung eines Zustands, der Ausgangszustand eines photochemischen Prozesses ist, und der Abregungslichtstrahl (18) zur Verhinderung dieses photochemischen Prozesses verwendet wird.

9. Vorrichtung zum räumlich eng begrenzten Anregen eines optischen Übergangs nach einem der Ansprüche 1 bis 8, mit einer den Anregungslichtstrahl (3) abgebenden Anregungslichtquelle (2) mit einem ersten Objektiv (9), zum Fokussieren des Anregungslichtstrahls (3) auf den Fokuspunkt (11), mit einer den Abregungslichtstrahl (18) abgebenden Abregungslichtquelle (19), mit einem den Abregungslichtstrahl (18) in die Teilstrahlen (22,23) aufspaltenden Strahlteiler (7), wobei einer der Teilstrahlen (22,23) durch das erste Objektiv (9) auf den Fokuspunkt (11) fokussiert wird, und mit mindestens einem zweiten Objektiv (25) zum Fokussieren eines anderen der Teilstrahlen (22,23) aus einer anderen Richtung auf den Fokuspunkt (11), um die Teilstrahlen (22,23) zur Interferenz zu bringen, **dadurch gekennzeichnet, dass** im Strahlengang der beiden aus unterschiedlichen Richtungen auf den Fokuspunkt (11) fokussierten Teilstrahlen (22, 23) vor dem jeweiligen Objektiv (9, 25) ein optisches Element (21) angeordnet ist, das die Wellenfronten (28) aberriert.

10. Vorrichtung nach Anspruch 9, **dadurch gekennzeichnet, dass** das die Wellenfronten (28) aberrierende optische Element (21) ein optisches Element aufweist das die Phase des Abregungslichts über die Wellenfronten (28) hinweg variiert.

11. Vorrichtung nach einem der Ansprüche 9 und 10, **dadurch gekennzeichnet, dass** das die Wellenfronten (28) aberrierende optische Element (21) computeradressierbar ist, um eine gewünschte Aberration einzustellen.

12. Vorrichtung nach einem der Ansprüche 9 bis 11, **dadurch gekennzeichnet, dass** die beiden Objektive (9, 25) identisch sind und einen halben Aperturwinkel größer als 58° aufweisen und dass in dem Strahlengang eines der Teilstrahlen (22, 23) ein Phasenjustierelement angeordnet ist.

13. Vorrichtung nach einem der Ansprüche 9 bis 12, **dadurch gekennzeichnet, dass** nur eine aktive Lichtquelle vorgesehen ist, die unmittelbar entweder als Anregungslichtquelle (2) oder als Abregungslichtquelle (19) ausgebildet ist wobei zur Ausbildung der jeweils anderen Lichtquelle neben der aktiven Lichtquelle zusätzlich ein passives nichtlineares optisches Element eingesetzt wird.

## Claims

1. A method of exciting an optical transition in a narrowly limited area comprising the step of superimposing a focus area (12) of an excitation light beam whose wavelength is tuned to the optical transition to be excited, the focus area (12) extending about a focus point (11), with a spatial interference pattern of a de-excitation light beam (18) which is somehow influencing the optical transition, which is split up into partial beams (22, 23), and which is brought to interference with itself in the focus area (12) in form of its partial beams (22, 23) focused out of different directions, the interference pattern having an intensity minimum at the focus point (11) and a plurality of intensity maxima on different sides of the focus point (11), **characterized in that** the wave fronts (28) of the partial beams (22, 23) of the de-excitation light beam which are focused onto the focus point (11) out of opposite directions are aberrated prior to focusing onto the focus point so that the intensity maxima (31, 32) of the interference pattern (30) on both sides of the focus point are spatially expanded without eliminating the intensity minimum at the focus point (11).

2. The method of claim 1, **characterized in that** the partial beams (22, 23) are focused onto the focus point (11) out of diametrical directions.

3. The method of claim 1 or 2, **characterized in that** the excitation light beam (3) is not brought to interference with itself in the focus area (12).

4. The method of any of the claims 1 to 3, **characterized in that** the intensity maxima (31, 32) of the interference pattern (30) are spatially expanded to such an extent that a zero intensity point between the first order and the second order intensity maxima (31, 32) on both sides of the focus point (11) diminishes.

5. The method of any of the claims 1 to 4, **characterized in that** the wave fronts (28) of the partial beams (22, 23) of the de-excitation light beam (18) are aberrated in a same way **in that** the wave fronts (28) of the de-excitation light beam (18) are aberrated prior to splitting it up into the partial beams (22, 23).

6. The method of any of the claims 1 to 5, **characterized in that**, in aberrating the wave fronts (28) of the partial beams (22, 23) of the de-excitation light beam (18), areas of the wave fronts (28) are phase shifted with regard to each other by more than the coherence length of the de-excitation light (18) beam.

7. The method of any of the claims 1 to 6, **characterized in that** the excitation light beam (3) is used for exciting a sample (10) for spontaneous emission of fluorescence light (13), and the de-excitation light beam (18) is used for inhibiting the excitation or for initiating stimulated emission of the sample (10), the spontaneously emitted fluorescence light being detected in a confocal way.

8. The method of any of the claims 1 to 17, **characterized in that** the excitation light beam (3) is used for exciting a state which is a starting state of a photo-chemical process, and that the de-excitation light beam (18) is used for inhibiting this photo-chemical process.

9. An device for exciting an optical transition in a narrowly limited area according to any of the claims 1 to 8, comprising an excitation light source (2) providing the excitation light beam (3), a first lens system (9) for focusing the excitation light beam (3) onto the focus point (11), a de-excitation light source (19) providing the de-excitation light beam (18), a beam splitter (7) splitting up the excitation light beam (18) into the partial beams (22, 23), one of the partial beams (22, 23) being focused onto the focus point by the first lens system (9), and at least a second lens system (25) for focusing one of the other partial beams (22, 23) out of another direction onto the focus point (11) to bring the partial beams (22, 23) to interference **characterized in that** an optical element (21) aberrating the wave fronts (28) is arranged in front of the respective lens system (9, 25) in the beam path of the two partial beams (22, 23) focused on the focus point (11) out of opposition directions.

10. The device of claim 9, **characterized in that** the optical element (21) aberrating the wave fronts (28) comprises an optical element which varies the phase of the de-excitation light across the wave fronts (28).

11. The device of any of the claims 9 and 10, **characterized in that** the optical element (21) aberrating the wave fronts (28) can be addressed by a computer to adjust the desired aberration.

12. The device of any of the claims 9 to 11, **characterized in that** the two lens systems (9, 25) are identical and have a half aperture angle of more than 58°, and that a phase adjusting element is arranged in the beam path of one of the partial beams (22, 23).

13. The device of any of the claim 9 to 12, **characterized in that** only one active light source is provided which is directly either provided as the excitation light source (2) or as the de-excitation light source (19), a passive non-linear optical element being used in addition to the active light source for providing the respective other light source.

## Revendications

1. Procédé pour exciter de manière étroitement limitée dans l'espace une transition optique, une zone focale (12), s'étendant sur un point focal (11), d'un rayon lumineux d'excitation (3) dont la longueur d'onde est accordée à la transition optique à exciter, est superposée, depuis différentes directions, avec un modèle d'interférence spatial, présentant un minimum d'intensité au point focal (11) et plusieurs maxima d'intensité sur différents côtés du point focal (11), d'un rayon lumineux de désexcitation (18) qui influence d'une manière quelconque la transition optique, est divisé en rayons partiels (22, 23) et amené en interférence avec lui-même dans la zone focale (13) sous la forme de ses rayons partiels (22, 23) focalisés, **caractérisé en ce que** les fronts d'ondes (28) des rayons partiels (22, 23) focalisés sur le point focal (11) depuis différentes directions, sont rendus aberrants sur le point focal (11) avant la focalisation, de sorte que sur chacun des côtés du point focal (11), les maxima d'intensité (31, 32) du modèle d'interférence (30) sont étendus dans l'espace, sans éliminer le minimum d'intensité au point focal (11).

2. Procédé selon la revendication 1, **caractérisé en ce que** les rayons partiels (22, 23) sont focalisés sur le point focal (11) à partir de directions opposées.

3. Procédé selon la revendication 1 ou 2, **caractérisé en ce que** le rayon lumineux d'excitation (3) n'est pas amené en interférence avec lui-même dans la zone focale (12).

4. Procédé selon l'une des revendications 1 à 3, **caractérisé en ce que** les maxima d'intensité (31, 32) du modèle d'interférence (3) sont étendus dans l'espace suffisamment pour qu'un point d'intensité zéro disparaisse entre le premier et le deuxième maximum d'intensité (31, 32) sur chaque côté du point focal (11).

5. Procédé selon l'une des revendications 1 à 4, **caractérisé en ce que** les fronts d'ondes (28) des rayons partiels (22, 23) du rayon lumineux de désexcitation (18) sont rendus aberrants de la même manière, par le fait que les fronts d'ondes (28) du rayon lumineux de désexcitation (28) sont rendus aberrants avant la division de ce rayon dans les rayons partiels (22, 23).

6. Procédé selon l'une des revendications 1 à 5, **caractérisé en ce que** lors de l'aberration des fronts d'ondes (28) des rayons partiels (22, 23) du rayon lumineux de désexcitation (18), des zones des fronts d'ondes (28) sont déphasées les unes par rapport aux autres de plus de la longueur de cohérence du rayon lumineux de désexcitation (18).

7. Procédé selon l'une des revendications 1 à 6, **caractérisé en ce qu'**on utilise le rayon lumineux d'excitation (3) pour exciter un échantillon (10) en vue de l'émission spontanée d'une lumière fluorescente (13), et le rayon lumineux de désexcitation (18) pour empêcher l'excitation ou pour déclencher l'émission stimulée de l'échantillon (10), la lumière fluorescente (13) émise spontanément étant détectée de manière co-focale.

8. Procédé selon l'une des revendications 1 à 7, **caractérisé en ce que** le rayon lumineux d'excitation (3) est utilisé pour exciter un état qui est l'état initial d'un processus photochimique, et le rayon lumineux de désexcitation (18) est utilisé pour empêcher ce processus photochimique.

9. Dispositif pour exciter de manière étroitement limitée dans l'espace une transition optique selon l'une des revendications 1 à 8, comportant une source de lumière d'excitation (2) émettant le rayon lumineux d'excitation (3) avec un premier objectif (9) pour focaliser le rayon lumineux d'excitation (3) sur le point focal (11), comportant une source de lumière de désexcitation (19) émettant le rayon lumineux de désexcitation (18), comportant un diviseur de rayon (16) divisant le rayon lumineux de désexcitation (18) dans les rayons partiels (22, 23), l'un des rayons partiels (22, 23) étant focalisé par le premier objectif (9) sur le point focal (11), et comportant au moins un deuxième objectif (25) pour focaliser un autre des rayons partiels (22, 23) à partir d'une autre direction, sur le point focal (11), afin d'amener en interférence les rayons partiels (22, 23), **caractérisé en ce que** dans le parcours des rayons des deux rayons partiels (22, 23), focalisés sur le point focal (11) à partir de directions différentes, il est disposé devant l'objectif (9, 25) respectif, un élément optique (21) qui rend aberrants les fronts d'ondes (28).

10. Dispositif selon la revendication 9, **caractérisé en ce que** l'élément optique (21), rendant aberrants les fronts d'ondes (28), comporte un élément optique qui modifie la phase de la lumière de désexcitation sur les fronts d'ondes (28).

11. Dispositif selon l'une des revendications 9 ou 10, **caractérisé en ce que** l'élément optique (21), rendant aberrants les fronts d'ondes (28), peut être adressé par ordinateur afin de régler une aberration souhaitée.

12. Dispositif selon l'une des revendications 9 à 11, **caractérisé en ce que** les deux objectifs (9, 25) sont identiques et présentent un demi-angle d'ouverture supérieur à 58° et **en ce que** dans le parcours des rayons de l'un des rayons partiels (22, 23) est disposé un élément d'ajustement de phase.

13. Dispositif selon l'une des revendications 9 à 12, **caractérisé en ce qu'**il n'est prévu qu'une source lumineuse active qui est réalisée directement soit comme source lumineuse d'excitation (2), soit comme source lumineuse de désexcitation (19), un élément optique passif non linéaire étant inséré en supplément en plus de la source lumineuse active, pour réaliser l'autre source lumineuse.
